# EUROPEAN PATENT SPECIFICATION

(11) **EP 4 467 805 B1**
(45) Date of publication and mention of the grant of the patent: **22.10.2025**
(21) Application number: 23382497.8
(22) Date of filing: 26.05.2023
(51) Int. Cl.: F03D 7/02, F03D 13/35

(54) **DETECTING ROTOR IMBALANCE IN A WIND TURBINE**
ERKENNUNG VON ROTORUNWUCHT IN EINER WINDTURBINE
DÉTECTION D'UN DÉSÉQUILIBRE DE ROTOR DANS UNE ÉOLIENNE

(43) Date of publication of application: 27.11.2024
(73) Proprietor: General Electric Renovables España S.L., 08005 Barcelona (ES)
(72) Inventor: BOND-SMITH, Louis, 08005 Barcelona (ES); ALBISU ISO, Efren, 08005 Barcelona (ES)
(74) Representative: Bardehle Pagenberg S.L.

(56) References cited:
- WO-A1-2023/078520
- CN-A- 105 569 932
- CN-A- 113 435 395
- CN-A- 113 883 014
- US-B2- 10 907 615
- US-B2- 10 954 917
- KE CHEN ET AL: "Measuring and reconstruction algorithm based on improved second-order generalised integrator configured as a quadrature signal generator and phase locked loop for the three-phase AC signals of independent power generation systems", IET POWER ELECTRONICS, IET, UK, vol. 9, no. 11, 7 September 2016 (2016-09-07), pages 2155 - 2161, XP006058399, ISSN: 1755-4535, DOI: 10.1049/IET-PEL.2015.0967

## Description

### FIELD

The present disclosure relates to wind turbines, and to methods for detecting a wind turbine imbalance. The present disclosure more particularly relates to methods and systems for determining a wind turbine imbalance based on a comparison of the energy magnitude of a measured signal with an energy threshold.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

Modern wind turbines have increasingly larger rotor diameters to capture more energy throughout their lifetime and reduce the cost of energy. Large wind turbines typically operate at high rotational speeds, which can amplify the effects of mass and aerodynamic imbalances. As the rotor blades rotate faster, any imbalance in the blades, hub, or other components can create greater vibrations and stress on the turbine's bearings, gearbox, and other critical components.

Additionally, as the rotor blades increase in length, the stiffness of the blades is not proportionally increased, leading to more flexible blades that are more sensitive to dynamic perturbations. Therefore, wind turbines with longer blades may increase the risk of aerodynamic imbalances caused by changes in wind direction and speed.

Thus, mass and aerodynamic imbalances can lead to uneven loading and vibrations, and may also increase wear and tear on turbine components and may reduce energy output. Further, wind turbines subjected to load imbalances may require more frequent maintenance tasks.

Known approaches to monitor wind turbine imbalances include visual inspection and blade monitoring systems among others.

Visual inspections may be performed by trained technicians to identify any visible signs of damage or wear on the turbine components. This can include inspecting the rotor blades for signs of cracks, chips, or other damage, as well as checking for any signs of wear or damage on the gearbox, bearings, and other critical components. This approach is time-consuming and requires qualified personnel on-site. Further, this approach may require stopping the operation of the wind turbine.

On the other hand, blade monitoring systems generally include sensors installed on the blades to measure blade conditions, analyze the measured data obtained by the sensors and identify potential imbalances. However, blade monitoring systems may require complex calibration processes and require frequent maintenance.

CN113883014A provides a wind turbine generator impeller unbalance detection method and device, equipment and a storage medium.

US10907615B2 relates to a method of correcting rotor imbalance and a wind turbine thereof. The correction method comprises measuring the vibrations within at least one time window and determining an imbalance factor and an imbalance phase. The values of the parameters in the equation for calculating the correction action are then updated based on the imbalance factor and an imbalance phase. A correction angle for each of the wind turbine blades is calculated using these adjusted parameters.

CN113435395A relates to a wind wheel fault self-adaptive diagnosis method based on a self-adaptive Kalman filter.

Although known approaches may be used to estimate wind turbine imbalances, further improvements would be welcome in the art. Thus, the present disclosure provides improved methods and systems to determine an imbalance in a wind turbine that at least partially overcome some of the aforementioned drawbacks.

### SUMMARY

In an aspect of the present disclosure, a method for detecting an imbalance in a wind turbine according to claim 1 is provided. The method comprises receiving one or more movement signals indicative of oscillations of the wind turbine from one or more sensors on the wind turbine and determining an energy level of the movement signals at a rotor rotational speed frequency. The method further comprises comparing the energy level of the movement signals at the rotor rotational speed frequency to an energy threshold and determining an imbalance in the rotor if the energy level of the movement signals at the rotor rotational speed frequency is above the energy threshold.

According to this aspect, an imbalance in a wind turbine can be detected based on a comparison of an energy level of a movement signal to an energy threshold. Inventors have recognized that an imbalance in the rotor (which may be due to imperfections during manufacture and/or installation, wear or may be due to the accretion of matter like ice) can lead to oscillations at 1p frequency. By determining an energy level or energy content of the received signals at this frequency, a rotor imbalance may be detected. This results in a method that allows determining an imbalance in a wind turbine during wind turbine operation and without a need to install additional devices. Rather the method can be carried out relying on sensors that are already ordinarily incorporated in a wind turbine, and on sensor data that is ordinarily analyzed in any case. Further, this method may be performed as frequently as needed without affecting the overall power output of the wind turbine, and without incurring in excessive costs, e.g. associated with qualified personnel being on-site.

In a further aspect, a control system according to claim 13 is provided which is configured to carry out any example of the afore-mentioned method. The control system may be configured to detect an imbalance in a wind turbine by receiving one or more movement signals indicative of oscillations of the wind turbine from one or more sensors on the wind turbine and determining an energy level of the movement signals at a rotor rotational speed frequency. The control system may further be configured to compare the energy level of the movement signals at the rotor rotational speed frequency to an energy threshold and to determine an imbalance in the rotor if the energy level of the movement signals at the rotor rotational speed frequency is above the energy threshold.

In yet a further aspect, a wind turbine comprising such a control system according to claim 14 is provided.

Throughout this disclosure, the term "movement signal" should be understood as a signal that is at least partially representative of a movement. Thus, a movement signal may be, for example, a signal indicating a movement or deformation, or a signal comprising acceleration values.

The "default state" may herein be regarded as a reference state of a wind turbine, i.e. situation or state to which a comparison is to be made. The default state may be an "ideal" state of the wind turbine, i.e. a balanced, as delivered, wind turbine without any deterioration of the components or any accumulation of material on the blades. The default state may however be chosen differently.

When reference is made throughout the present disclosure to determining an "energy" or "energy content" of a signal, this is herein to be regarded as the determination (calculation or estimation) of any indicator which may be used to indicate energy, in particular including using the square of the signal magnitude, Root Mean Square (RMS) of a signal, the envelope of squared signal magnitude or the integral of squared signal magnitude. The energy or energy content of a signal can be calculated or estimated for a finite period of time. This finite period of time is herein called a "time window". It is noted that signal energy is not necessarily actually a measure of "energy" as understood in physics.

A natural frequency as used throughout the present disclosure may be regarded as a frequency at which resonance may occur. Each natural frequency has an associated mode, i.e. a shape that describes the structure's deformation. The lowest frequency at which deformation occurs is the first mode.

Additional objects, advantages and features of embodiments of the present disclosure will become apparent to those skilled in the art upon examination of the description, or may be learned by practice.

### BRIEF DESCRIPTION OF THE DRAWINGS

Figure 1 schematically illustrates a perspective view of one example of a wind turbine;
Figure 2 illustrates an example of a hub and a nacelle of a wind turbine;
Figure 3 shows a flowchart of an example of a method for detecting an imbalance in a wind turbine according to a first aspect of the present disclosure;
Figure 4 shows a flowchart of another example of the method in figure 3;
Figure 5 schematically illustrates an example of a control system of a wind turbine according to the present disclosure
Figure 6 shows a graph with two independent example movement signals.

### DETAILED DESCRIPTION OF EXAMPLES

Reference now will be made in detail to embodiments of the disclosure, one or more examples of which are illustrated in the drawings. Each example is provided by way of explanation, not as a limitation. In fact, it will be apparent to those skilled in the art that various modifications and variations can be made in the present disclosure without departing from the scope of the appended claims. For instance, features illustrated or described as part of one embodiment can be used with another embodiment to yield a still further embodiment. Thus, it is intended that the present disclosure covers such modifications and variations as come within the scope of the appended claims.

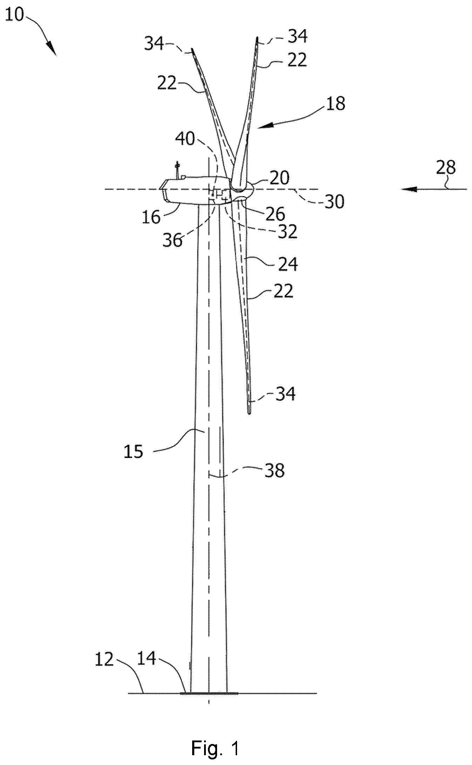

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root portion 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, i.e., an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed system throughout the wind turbine 10, on the support system 14, within a wind farm, and/or at a remote-control center. The wind turbine controller 36 includes a processor 40 configured to perform the methods and/or steps described herein. Further, many of the other components described herein include a processor.

As used herein, the term "processor" is not limited to integrated circuits referred to in the art as a computer, but broadly refers to a controller, a microcontroller, a microcomputer, a programmable logic controller (PLC), an application specific, integrated circuit, and other programmable circuits, and these terms are used interchangeably herein. It should be understood that a processor and/or a control system can also include memory, input channels, and/or output channels.

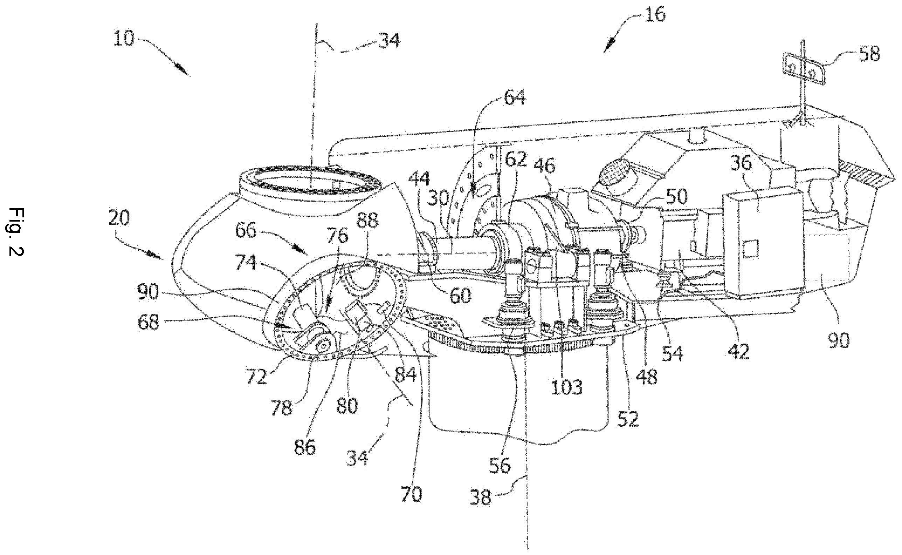

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between 400V to 1000 V into electrical energy having medium voltage (10 - 35 KV). Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drive train 64.

In some examples, the wind turbine may be a direct drive wind turbine without gearbox 46. Generator 42 operate at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system 58 which may include a wind vane and anemometer. The meteorological measurement system 58 can provide information to the wind turbine controller 36 that may include wind direction 28 and/or wind speed. In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power generator 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power generator 84 are each positioned in a cavity 86 defined by an inner surface 88 of hub 20. In an alternative embodiment, said components are positioned with respect to an outer roof surface of hub 20 and may be coupled, directly or indirectly, to the outer roof surface.

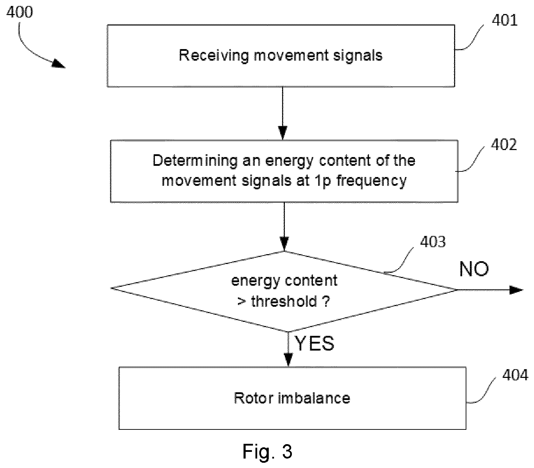

Figure 3 shows a flowchart of an example of a method 400 for detecting an imbalance in a wind turbine according to a first aspect of the present disclosure. The method 400 in figure 3 comprises, at block 401, receiving one or more movement signals from one or more sensors on the wind turbine. The method 400 also comprises, at block 402, determining an energy level of the movement signals at a rotor rotational speed frequency. The method 400, at block 403, comprises comparing the energy level of the movement signals at the rotor rotational speed frequency to an energy threshold. And at block 404, a determination regarding the rotor imbalance may be based on the comparison with the threshold.

As previously discussed, method 400 can detect an imbalance in a wind turbine based on an increase in the energy magnitude of a movement signal, i.e. at a rotor rotational speed frequency compared to an energy threshold. Thus, method 400 can estimate in a precise and robust manner whether a wind turbine is operating in an imbalance condition from the movement signals received. Further, method 400 allows detecting said wind turbine imbalance during wind turbine operation and without affecting the overall power output of the wind turbine. Additionally, method 400 can be performed by devices generally already included in a wind turbine, and therefore, does not require the installation of additional devices in the wind turbine.

The movement signals 401 may be obtained from a variety of sources. In particular, movement signals may be signals regarding accelerations. Such signals may be obtained from accelerometers installed in the wind turbine, e.g. in the rotor or the nacelle of the wind turbine or the top of the tower.

In accordance with the invention, the method further comprises determining an energy level of movement signals at the first natural frequency of a tower of the wind turbine and determining the energy threshold at least partially based on the energy level of the movement signals at the first natural frequency of a tower of the wind turbine. In these examples, the threshold for the determination of rotor imbalance or not is adjusted to an operational situation of the wind turbine. Both for the oscillations at the first natural frequency of the tower (first natural mode) and for the oscillations at rotor rotational speed frequency, meteorological (wind speed, turbulence, waves) and other conditions will have an effect. By making the energy threshold dependent on the oscillations in the first natural mode, the determination of a potential rotor imbalance may be made more reliable.

In some examples, the energy threshold is a fixed percentage of the energy level of the movement signals at the first natural frequency of a tower of the wind turbine. In accordance with the invention, the energy threshold may be between 40 and 100% of the energy level of the movement signals at the first natural frequency, specifically between 50 and 80%.

In other examples, the energy threshold may be at least partially based on a result from a computational simulation. The computational simulation may be a computational simulation of the wind turbine during operation. Further, the computational simulation may include a set of variables that may be dependent on weather conditions, such as atmospheric pressure, wind direction, mean wind velocity, e.g. free stream velocity, wind shear, and wind veer among others. In further examples, the energy threshold may be at least partially based on field data.

In some examples, determining the energy level of the movement signals at a rotor rotational speed frequency, at block 402, comprises filtering the received movement signals to obtain movement signals at rotor rotational speed frequency (i.e. 1p frequency). The movement signals obtained may have been pre-filtered or may comprise raw data. In the case of raw data, the signals may be filtered to select the signals at the 1p frequency.

Filtering the movement signals may comprise using a notch filter. Other filters, e.g. a bandpass filter may also be used. A band-pass filter may be applied to determine the movement signals at the rotor rotational speed frequency. A band-pass filter or "bandpass filter" may herein be regarded as a filter that passes frequencies within a certain range and rejects (attenuates) frequencies outside that range. Therefore the movement signals at the rotor rotational speed frequency may not necessarily correspond exactly to the movement signals at that frequency only, but instead may include a small (narrow) frequency band around rotor rotational speed frequency. These small frequency bands may also be referred to as "passband".

Such filtering steps substantially isolate movements with 1P frequency and allows mitigating the contribution of other sources of movements, such as the blades 22 passing the wind turbine tower (3P frequency), in the energy of the movement signal 410. Thus, the subsequent steps of method 400 may provide a more precise estimation of the change in the energy of the movement signal.

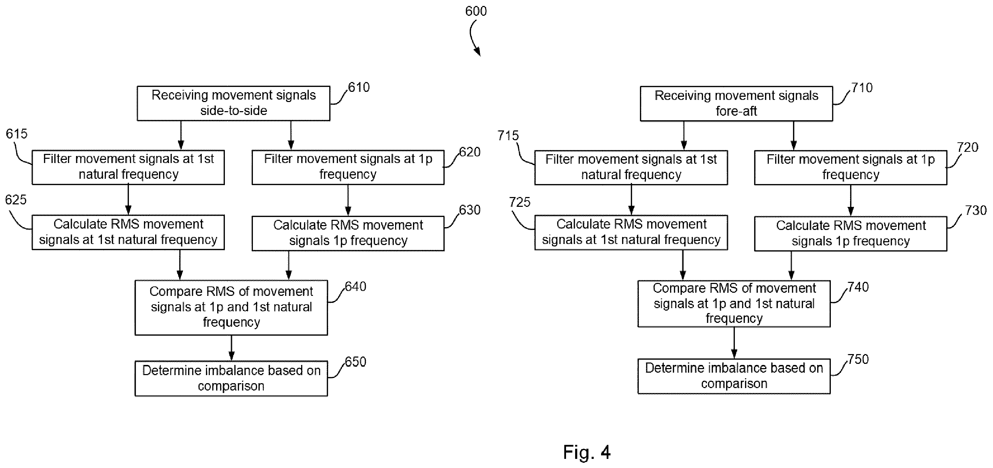

Additionally, method 400 may comprise a further filtering step (not illustrated in figure 4), wherein high frequency content from movement signals is filtered. This filtering step may comprise using a smoothing filter that may be applied to the movement signal in the time domain or in the frequency domain. The smoothing filtering may be a moving average filter, a weighted moving average filter such as a binomial, exponential or polynomial weighted moving average filter, a median filter, or others. Further, the filtering step may comprise resampling the movement signals 401 before applying a smoothing filter. The filtering step may also comprise a step of outlier removal. Additionally, filtering approaches combining outlier removal and smoothing may be also applied, as for example a Hampel filter.

Determining the energy level of the movement signals at the rotor rotational speed frequency, at block 402, may comprise calculating a Root Mean Square of the corresponding movement signals during a time window. The time window may be selected appropriately in order to be able to determine the appearance of the phenomenon that is to be detected. In examples, the period of time may be chosen to be between 1 minute (including at least a few revolutions of the wind turbine rotor) and 15 minutes, specifically between 3 minutes and 10 minutes. Also, other time periods may be used.

Alternatively, other computing operations could be applied to estimate the energy magnitude of the signal. For example, for highly periodic signals, block 402 of method 400 may comprise calculating the peak-to-peak magnitude. Additionally, block 402 may comprise performing several computing operations to obtain the energy magnitude, and therefore enhance the robustness of method 400.

It is noted that the same or similar filtering steps and the same or similar calculations may also be applied for the determination of the energy level at the natural frequency of the wind turbine tower.

In some examples, the movement signals comprise movement signals in a fore-aft direction and/or a side-to-side direction of the wind turbine. And in some examples, determining the energy level of the movement signals comprises determining an energy level of the movement signals at rotor rotational speed frequency in a fore-aft direction and in a side-to-side direction, and the method further comprises determining whether the wind turbine is subjected to an aerodynamic imbalance and/or a mass imbalance based on the energy level of the acceleration signals at rotor rotational speed frequency in the fore-aft direction and in the side-to-side direction.

Specific sensors may provide information on oscillations in the fore-aft direction, whereas other sensors might provide information on oscillations in the side-to-side directions. If there is a mass imbalance in the blades (regardless of whether this mass imbalance is caused in manufacture, or due to the accretion of material on the blades like ice), the mass imbalance will generally lead to a more pronounced effect in the side-to-side oscillation rather than in the fore-oft direction.

On the other hand, an aerodynamic imbalance (e.g. caused by difference in shape of the blades due to erosion or accretion of matter, or variation in default pitch angle between blades or other) will lead to a more pronounced effect in the fore-aft direction because the aerodynamic thrust provided by the blades will be different. By making separate determinations for the fore-aft direction, and the side-to-side directions, hints may be obtained as to the possible causes for an imbalance.

In some examples, the method may be carried out during normal operation of the wind turbine, and optionally wherein the method is carried out in real-time. The methods disclosed herein generally do not require interrupting or stopping of operation and a corresponding loss of power production can be avoided.

In examples, when a determination of a rotor imbalance has been made, the method may further comprises generating a flag signal or making an operational change in response to determining an imbalance in the rotor. A flag signal may be a general warning signal, or may comprise more than a warning. I.e. in some cases, the flag signal may comprise an indication of possible causes and/or possible countermeasures. In some case, the flag signal may indicate or trigger scheduling of maintenance or repair.

In examples, an operational change may be made, which may be one or more of the following: reducing power output, reducing rotor rotational speed, modifying a pitch angle of one or more blades of the wind turbine, or stopping operation of the wind turbine.

In a further aspect, a method according to figure 4 is provided. A method 600 for determining an imbalance in a rotor of a wind turbine is provided. The method 600 comprises receiving movement signals indicative of movements of the rotor in a side-to-side and in a fore-aft direction, blocks 610, 710. The signals separated by directions may be obtained from different (groups of) sensors in some examples. In other examples, the signals be obtained from the same sensor but may be processed in order to provide signals regarding the oscillations in the two directions.

The method 600 further comprises, at blocks 615 and 620, filtering the received movement signals to determine movement signals at rotor rotational speed frequency in the side-to-side direction and in the fore-aft direction. Filtering methods as hereinbefore described may be used e.g. bandpass filter, notch filter etc.

The method also comprises, at blocks 715, 720, filtering the received movement signals to determine movement signals at a first natural frequency of the tower in the side-to-side direction and in the fore-aft direction. Again, the same or similar filtering may be used.

The method 600 also comprises, at blocks 625, 630, 725 and 730, calculating an energy level of the movement signals in the side-to-side direction and in the fore-aft direction at rotor rotational speed frequency and calculating an energy level of the movement signals in the side-side-direction and in the fore-aft direction at the first natural frequency of the tower. In the example of figure 4, energy levels may be determined using the Root Mean Square method, but other methods are possible as well.

The method then further comprises, at block 640, comparing the calculated energy level of the movement signals in the side-to-side direction at the rotor rotational speed frequency and with the calculated energy level of the movement signals in the side-to-side direction at the first natural frequency. And at block 740, the calculated energy level of the movement signals in the fore-aft direction at the rotor rotational speed frequency is compared with the calculated energy level of the movement signals in the fore-aft direction at the first natural frequency. At block 750, whether or not a rotor imbalance exists may be determined based on the comparisons of the energy levels.

In the example of figure 4, the various processes regarding fore-aft and side-to-side directions are carried out in parallel, but in other examples they may be carried out sequentially as well.

In the example of figure 4, the processes regarding the energy content for different modes of oscillation are carried out in parallel, but in other examples they may be carried out sequentially.

The method may be carried out during operation at a desired frequency and as often as necessary. For example, the method 600 may be reiterated every 10 minutes, or every hour, or every day. It is not necessary for any of the parallel processes to be completed entirely before another iteration starts. It is also not necessary for each of the parallel processes to be carried out with the same frequency.

In some examples, the method may comprise determining a ratio of the calculated energy levels in fore-aft direction, and a ratio of the calculated energy levels in side-to-side direction. A threshold level for the ratios may be defined, e.g. a threshold of 0,4 - 1 may be chosen, specifically 0,4 - 0,8. When either or both of the ratios reach the threshold, operation may be affected and/or a flag signal may be sent as explained hereinbefore.

In some examples, the movement signals comprise acceleration signals including acceleration measurements in a fore-aft direction and/or a side-to-side direction of the wind turbine. The acceleration signals may come from sensors located in a nacelle of the wind turbine or in other components of the wind turbine, e.g. an upper section of the wind turbine tower.

In some cases, the energy level of the movement signals at 1p frequency in the side-to-side direction may be compared with the energy level of the movement signals 1p frequency in the fore-aft direction, in order to help with the diagnosis of the cause of the imbalance.

In a further aspect, a control system 500 for detecting a wind turbine imbalance is disclosed. A control system for detecting a wind turbine imbalance may comprise a processor configured to carry out any of the methods herein disclosed.

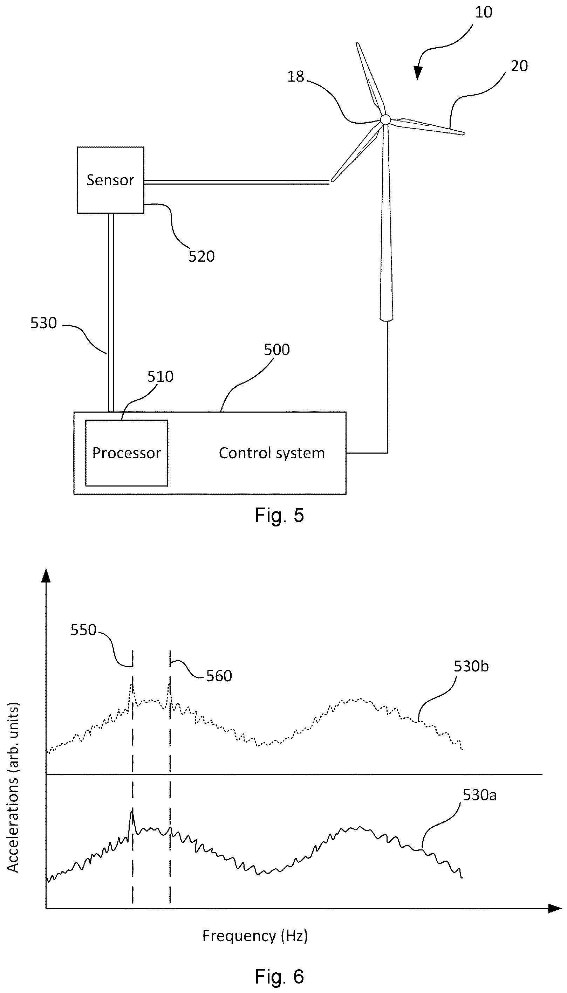

An example of such control system 500 is schematically illustrated in figure 5. The control system 500 comprises a processor 510 configured to receive one or more movement signals 530 from one or more wind turbine sensors 520. Further, the processor 510 is configured to determine an energy magnitude from the movement signals 530 at a rotor rotational speed frequency. Additionally, the processor 510 is configured to compare the energy magnitude from the movement signals 530 at the rotor rotational speed frequency to an energy threshold. Then, the processor 500 is configured to generate a flag signal if the energy magnitude from the movement signals 530 at the rotor rotational speed frequency is greater than the energy threshold.

In some examples, the processor 510 of the control system 500 may be configured to receive movement signals 530 from acceleration sensors 520 located in a nacelle of the wind turbine. In other examples, the sensors 520 may be located in other (or several) components of the wind turbine. Additionally, the sensors 520 may be at least one of an optical sensor or a strain gauge sensor.

In examples of the control system 500 according to the present disclosure, the control system 500 may be in communication with other devices of the wind turbine 10. For example, the control system 500 may be in communication with a pitch drive system 68, such that it may command the pitch drive system 68 according to the flag signal generated.

Further, in examples the control system 500 is in communication with a memory device comprising load data from computational simulations of wind turbines. The load data may be accessed by the control system 500 to establish the energy threshold(s).

Additionally, the control system 500 in some examples may be configured to determine an energy magnitude from an acceleration signal in a fore-aft direction and from an acceleration signal in a side-to-side direction. This may be performed sequentially or in parallel, i.e. parallel computing. Then, the control system 500 may use the energy magnitudes determined to detect if the wind turbine imbalance is an aerodynamic imbalance or a mass imbalance.

In some examples, the wind turbine may further comprise a pitch drive mechanism in communication with the control system; and the control system may be configured to command the pitch drive mechanism according to the generated flag signal. Thus, the pitch angle of one or multiple blades may be changed to mitigate the wind turbine imbalance. Although a modification of the pitch angle may be more suitable for compensating aerodynamic imbalances, this may be also used for a general reduction of loads when needed.

In examples, the wind turbine 10 may further comprise a communication unit configured to send the flag signal to a local wind turbine controller, to a SCADA system or to a Remote Operating Center. In other examples, the control system 500 may form part of the local wind turbine controller.

Figure 6 shows a graph with example movement signals 530a, 530b and frequency points associated with rotor rotational speed frequency 550 and with wind turbine tower natural frequency 560. Figure 6 shows two independent movement signals 530a, 530b, sharing the frequency axis.

The movement signal 530a in this figure is a schematical representation of a movement signal (more particularly an acceleration, e.g. of the nacelle) of a wind turbine in a fore-aft direction. It may be seen that the energy content at the 1p frequency (line 550) is higher than the energy content at the 1st natural frequency (line 560). This may be indicative of a strong aerodynamic imbalance in the rotor.

Additionally, the movement signal 530b illustrated above is a schematical representation of a movement signals of a wind turbine in the same situation, but in side-to-side direction. In this case, the energy content at the first peak (1p frequency) is substantially the same as the energy content at the second peak corresponding to the first natural frequency of the tower. There is therefore a significant imbalance in this direction too. If the imbalance occurs in both side-to-side and fore-aft, a more likely cause is an aerodynamic imbalance. If the imbalance occurs predominantly occurs in side-to-side and hardly occurs in fore-aft direction, then the most likely cause would be a mass imbalance.

In a further aspect, a wind turbine 10 comprising a control system 500 for detecting a wind turbine imbalance is provided. The control system 500 of the wind turbine comprises a processor 510 configured to receive one or more movement signals 530 from one or more wind turbine sensors 520. Further, the processor 510 may be configured to determine an energy level of the movement signals 530 at a rotor rotational speed frequency. Additionally, the processor 510 may be configured to compare the energy level of the movement signals at the rotor rotational speed frequency to an energy threshold and generate a flag signal if the energy magnitude from the movement signals at the rotor rotational speed frequency is greater than the energy threshold.

It is noted that all features of the control system 500 can be included in methods 400, 600 suitable for detecting an imbalance in a wind turbine, and vice versa. Further, those of skill in the art would appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and circuits described in connection with the disclosure herein may be implemented or performed with one or more general-purpose processors, a digital signal processor (DSP), cloud computing architecture, an application specific integrated circuit (ASIC), a field programmable gate array (FPGA) , programmable logic controller (PLC) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The present disclosure also related to computing systems adapted to carry out any of the methods disclosed herein.

The present disclosure also relates to a computer program or computer program product comprising instructions (code), which when executed, performs any of the methods disclosed herein.

The computer program may be in the form of source code, object code, a code intermediate source and object code such as in partially compiled form, or in any other form suitable for use in the implementation of the processes. The carrier may be any entity or device capable of carrying the computer program.

If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

This written description uses examples to disclose the teaching, including the preferred embodiments, and also to enable any person skilled in the art to practice the teaching, including making and using any devices or systems and performing any incorporated methods. The patentable scope is defined by the claims, and may include other examples that occur to those skilled in the art. If reference signs related to drawings are placed in parentheses in a claim, they are solely for attempting to increase the intelligibility of the claim, and shall not be construed as limiting the scope of the claim.

## Claims

1. A method (400; 600) for detecting an imbalance in a rotor (18) of a wind turbine (10), the method comprising:
receiving one or more movement signals (401; 610; 710) indicative of oscillations of the wind turbine from one or more sensors on the wind turbine;
determining an energy level (402; 630, 730) of the movement signals at a rotor rotational speed frequency;
comparing (403; 640, 740) the energy level of the movement signals at the rotor rotational speed frequency to an energy threshold;
determining an imbalance (404; 650, 750) in the rotor if the energy level of the movement signals at the rotor rotational speed frequency is above the energy threshold.
determining (625, 725) an energy level of movement signals at the first natural frequency of a tower (15) of the wind turbine (10); and
determining the energy threshold at least partially based on the energy level of the movement signals at the first natural frequency of the tower (15) of the wind turbine, wherein
the energy threshold is between 40 and 100% of the energy level of the movement signals at the first natural frequency.

2. The method of claim 1, wherein the energy threshold is a fixed percentage of the energy level of the movement signals at the first natural frequency of the tower (15) of the wind turbine.

3. The method of claim 1 or 2, wherein the energy threshold is between 50 and 80% of the energy level of the movement signals at the first natural frequency.

4. The method of any of claims 1 - 3, wherein determining the energy level of the movement signals at a rotor rotational speed frequency comprises filtering (615, 715) the received movement signals to obtain movement signals at rotor rotational speed frequency.

5. The method of claim 4, wherein filtering the movement signals comprises using a notch filter.

6. The method of claim 4, wherein filtering the movement signals comprises using a bandpass filter.

7. The method of any one of claims 1 - 3, wherein determining the energy level of the movement signals at the rotor rotational speed frequency and/or at the first natural frequency of the tower of the wind turbine comprises calculating (630, 730) a Root Mean Square of the corresponding movement signals during a time window.

8. The method of any one of claims 1 - 7, wherein the movement signals comprise movement signals in a fore-aft direction and/or a side-to-side direction of the wind turbine.

9. The method of claim 8, wherein determining the energy magnitude of the movement signals comprises determining an energy level of the movement signals at rotor rotational speed frequency in a fore-aft direction and in a side-to-side direction, and the method further comprises:
determining whether the wind turbine is subjected to an aerodynamic imbalance and/or a mass imbalance based on the energy level of the acceleration signals at rotor rotational speed frequency in the fore-aft direction and in the side-to-side direction.

10. The method of any of claims 1 - 9, wherein the method is carried out during normal operation of the wind turbine (10), and optionally wherein the method is carried out in real-time.

11. The method of any of claims 1 - 10, further comprising generating a flag signal or making an operational change in response to determining an imbalance in the rotor, and optionally wherein the operational change is one or more of the following: reducing power output, reducing rotor rotational speed, modifying a pitch angle of one or more blades of the wind turbine, or stopping operation of the wind turbine.

12. The method of any of claims 1 - 11, wherein the movement signals are obtained from one or more accelerometers.

13. A control system for detecting a wind turbine imbalance, the system comprising a processor configured to carry out any of the methods of claims 1 - 12.

14. A wind turbine comprising the control system of claim 13.

## Patentansprüche

1. Verfahren (400; 600) zum Erkennen einer Unwucht in einem Rotor (18) einer Windturbine (10), wobei das Verfahren umfasst:
Empfangen eines oder mehrerer Bewegungssignale (401; 610; 710), die Schwingungen der Windturbine anzeigen, von einem oder mehreren Sensoren an der Windturbine;
Bestimmen eines Energieniveaus (402; 630, 730) der Bewegungssignale bei einer Rotordrehzahlfrequenz;
Vergleichen (403; 640, 740) des Energieniveaus der Bewegungssignale bei der Rotordrehzahlfrequenz mit einem Energieschwellenwert;
Bestimmen einer Unwucht (404; 650, 750) im Rotor, wenn das Energieniveau der Bewegungssignale bei der Rotordrehzahlfrequenz über dem Energieschwellenwert liegt;
Bestimmen (625, 725) eines Energieniveaus von Bewegungssignalen bei der ersten Eigenfrequenz eines Turms (15) der Windturbine (10); und
Bestimmen des Energieschwellenwerts zumindest teilweise auf Grundlage des Energieniveaus der Bewegungssignale bei der ersten Eigenfrequenz des Turms (15) der Windturbine, wobei
der Energieschwellenwert zwischen 40 und 100 % des Energieniveaus der Bewegungssignale bei der ersten Eigenfrequenz liegt.

2. Verfahren nach Anspruch 1, wobei der Energieschwellenwert ein fester Prozentsatz des Energieniveaus der Bewegungssignale bei der ersten Eigenfrequenz des Turms (15) der Windturbine ist.

3. Verfahren nach Anspruch 1 oder 2, wobei der Energieschwellenwert zwischen 50 und 80 % des Energieniveaus der Bewegungssignale bei der ersten Eigenfrequenz liegt.

4. Verfahren nach einem der Ansprüche 1-3, wobei das Bestimmen des Energieniveaus der Bewegungssignale bei einer Rotordrehzahlfrequenz das Filtern (615, 715) der empfangenen Bewegungssignale umfasst, um Bewegungssignale bei der Rotordrehzahlfrequenz zu erhalten.

5. Verfahren nach Anspruch 4, wobei das Filtern der Bewegungssignale die Verwendung eines Kerbfilters umfasst.

6. Verfahren nach Anspruch 4, wobei das Filtern der Bewegungssignale die Verwendung eines Bandpassfilters umfasst.

7. Verfahren nach einem der Ansprüche 1-3, wobei das Bestimmen des Energieniveaus der Bewegungssignale bei der Rotordrehzahlfrequenz und/oder bei der ersten Eigenfrequenz des Turms der Windturbine das Berechnen (630, 730) eines quadratischen Mittelwerts der entsprechenden Bewegungssignale während eines Zeitfensters umfasst.

8. Verfahren nach einem der Ansprüche 1-7, wobei die Bewegungssignale Bewegungssignale in einer Vorwärts-Rückwärts-Richtung und/oder einer Seite-zu-Seite-Richtung der Windturbine umfassen.

9. Verfahren nach Anspruch 8, wobei das Bestimmen der Energiegröße der Bewegungssignale das Bestimmen eines Energieniveaus der Bewegungssignale bei der Rotordrehzahlfrequenz in einer Vorwärts-Rückwärts-Richtung und einer Seite-zu-Seite-Richtung umfasst, und das Verfahren ferner umfasst:
Bestimmen, ob die Windturbine einer aerodynamischen Unwucht und/oder einer Massenunwucht ausgesetzt ist, auf Grundlage des Energieniveaus der Beschleunigungssignale bei der Rotordrehzahlfrequenz in der Vorwärts-Rückwärts-Richtung und in der Seite-zu-Seite-Richtung.

10. Verfahren nach einem der Ansprüche 1-9, wobei das Verfahren während des Normalbetriebs der Windturbine (10) ausgeführt wird und wobei das Verfahren optional in Echtzeit ausgeführt wird.

11. Verfahren nach einem der Ansprüche 1-10, das ferner das Erzeugen eines Flag-Signals oder das Vornehmen einer Betriebsänderung als Reaktion auf das Bestimmen einer Unwucht im Rotor umfasst, und wobei die Betriebsänderung optional eine oder mehrere der Folgenden ist: Reduzieren der Leistungsabgabe, Reduzieren der Rotordrehzahl, Modifizieren eines Einstellwinkels eines oder mehrerer Rotorblätter der Windturbine oder Stoppen des Betriebs der Windturbine.

12. Verfahren nach einem der Ansprüche 1-11, wobei die Bewegungssignale von einem oder mehreren Beschleunigungsmessern erhalten werden.

13. Steuersystem zum Erkennen einer Unwucht einer Windturbine, wobei das System einen Prozessor umfasst, der zum Ausführen eines der Verfahren der Ansprüche 1-12 konfiguriert ist.

14. Windturbine, die das Steuersystem nach Anspruch 13 umfasst.

## Revendications

1. Procédé (400 ; 600) de détection d'un déséquilibre dans un rotor (18) d'une éolienne (10), le procédé comprenant :
la réception d'un ou plusieurs signaux de mouvement (401 ; 610 ; 710) indiquant des oscillations de l'éolienne à partir d'un ou plusieurs capteurs sur l'éolienne ;
la détermination d'un niveau d'énergie (402 ; 630, 730) des signaux de mouvement sur une fréquence de vitesse de rotation de rotor ;
la comparaison (403 ; 640, 740) du niveau d'énergie des signaux de mouvement à la fréquence de vitesse de rotation de rotor à un seuil d'énergie ;
la détermination d'un déséquilibre (404 ; 650, 750) dans le rotor si le niveau d'énergie des signaux de mouvement à la fréquence de vitesse de rotation de rotor est supérieur au seuil d'énergie ;
la détermination (625, 725) d'un niveau d'énergie de signaux de mouvement à la première fréquence naturelle d'une tour (15) de l'éolienne (10) ; et
la détermination du seuil d'énergie au moins en partie sur la base du niveau d'énergie des signaux de mouvement à la première fréquence naturelle de la tour (15) de l'éolienne, dans lequel
le seuil d'énergie se situe entre 40 % et 100 % du niveau d'énergie des signaux de mouvement à la première fréquence naturelle.

2. Procédé selon la revendication 1, dans lequel le seuil d'énergie est un pourcentage fixe du niveau d'énergie des signaux de mouvement à la première fréquence naturelle de la tour (15) de l'éolienne.

3. Procédé selon la revendication 1 ou 2, dans lequel le seuil d'énergie est compris entre 50 % et 80 % du niveau d'énergie des signaux de mouvement à la première fréquence naturelle.

4. Procédé selon l'une quelconque des revendications 1 à 3, dans lequel la détermination du niveau d'énergie des signaux de mouvement à une fréquence de vitesse de rotation de rotor comprend le filtrage (615, 715) des signaux de mouvement reçus pour obtenir des signaux de mouvement à la fréquence de vitesse de rotation de rotor.

5. Procédé selon la revendication 4, dans lequel le filtrage des signaux de mouvement comprend l'utilisation d'un filtre coupe-bande.

6. Procédé selon la revendication 4, dans lequel le filtrage des signaux de mouvement comprend l'utilisation d'un filtre passe-bande.

7. Procédé selon l'une quelconque des revendications 1 à 3, dans lequel la détermination du niveau d'énergie des signaux de mouvement à la fréquence de vitesse de rotation de rotor et/ou à la première fréquence naturelle de la tour de l'éolienne comprend le calcul (630, 730) d'une valeur moyenne quadratique des signaux de mouvement correspondants pendant une fenêtre temporelle.

8. Procédé selon l'une quelconque des revendications 1 à 7, dans lequel les signaux de mouvement comprennent des signaux de mouvement dans une direction avant-arrière et/ou une direction latérale de l'éolienne.

9. Procédé selon la revendication 8, dans lequel la détermination de l'amplitude énergétique des signaux de mouvement comprend la détermination d'un niveau d'énergie des signaux de mouvement à la fréquence de vitesse de rotation de rotor dans une direction avant-arrière et dans une direction latérale, et le procédé comprend en outre :
la détermination pour savoir si l'éolienne est soumise à un déséquilibre aérodynamique et/ou à un déséquilibre de masse en fonction du niveau d'énergie des signaux d'accélération à une fréquence de vitesse de rotation de rotor dans la direction avant-arrière et dans la direction latérale.

10. Procédé selon l'une quelconque des revendications 1 à 9, dans lequel le procédé est réalisé pendant le fonctionnement normal de l'éolienne (10), et éventuellement dans lequel le procédé est réalisé en temps réel.

11. Procédé selon l'une quelconque des revendications 1 à 10, comprenant en outre la génération d'un signal d'indicateur ou la réalisation d'un changement opérationnel en réponse à la détermination d'un déséquilibre dans le rotor, et éventuellement dans lequel le changement opérationnel est un ou plusieurs des éléments suivants : réduction de la puissance de sortie, réduction de la vitesse de rotation de rotor, modification d'un angle de pas d'une ou plusieurs pales de l'éolienne, ou arrêt du fonctionnement de l'éolienne.

12. Procédé selon l'une quelconque des revendications 1 à 11, dans lequel les signaux de mouvement sont obtenus à partir d'un ou plusieurs accéléromètres.

13. Système de commande permettant de détecter un déséquilibre d'éolienne, le système comprenant un processeur configuré pour réaliser l'un quelconque des procédés selon les revendications 1 à 12.

14. Éolienne comprenant le système de commande selon la revendication 13.
